# EUROPEAN PATENT SPECIFICATION

(11) **EP 3 251 528 B1**
(45) Date of publication and mention of the grant of the patent: **23.08.2023**
(21) Application number: 17174373.5
(22) Date of filing: 02.06.2017
(51) Int. Cl.: A23P 20/10, A23L 5/10, A23L 7/157

(54) **COATING COMPOSITION**
BESCHICHTUNGSZUSAMMENSETZUNG
COMPOSITION DE REVÊTEMENT

(30) Priority: 03.06.2016 GB 201609761
(43) Date of publication of application: 06.12.2017
(73) Proprietor: Nomad Foods Europe IPCO Limited, Bedfont Lakes Business Park Feltham, Middlesex TW14 8HA (GB)
(72) Inventor: Matthew, Timothy, Feltham, Middlesex TW14 8HA (GB); Edwards, Damian, Feltham, Middlesex TW14 8HA (GB); Metten-Helbich, Dieter, 27572 Bremerhaven (DE); Wichels, Janne-Christin, 27572 Bremerhaven (DE); Radziwill, Petra, 27572 Bremerhaven (DE)
(74) Representative: Haseltine Lake Kempner LLP

(56) References cited:
- EP-A1- 1 929 887
- WO-A1-96/26652
- CA-A1- 2 101 474
- JP-A- H11 103 807
- JP-A- 2000 333 633

## Description

The present invention relates to a coating composition for use in frozen food products. In particular, the invention discloses frozen, coated food products which can be cooked and/or re-heated using a conventional oven, grill, pan fry, fryer or a microwave oven. The present invention also defines a process for making a frozen, coated food product.

### Background of the Invention

Freezing food is a convenient way of preserving food products. Conventional household freezers are commonly used to freeze food in domestic kitchens. This process of preserving food is particularly preferred by consumers as it is quick, efficient, cost-effective and often does not require that the food product contains any added preservatives. Freezing food slows down composition by turning residual moisture into ice, which inhibits growth of bacteria.

WO 96/26652 A1 discloses a process for the manufacture of a food product comprising: (i) applying batter to a frozen food inner core to form a food core; (ii) setting the batter; (iii) freezing the food core; (a) enrobing the frozen food core with an adhesion agent, the adhesion agent being at a temperature of from 0 to 20 DEG C, wherein the adhesion agent has a viscosity of from 0.1 to 6 Pas at 20 DEG C, a setting point of from 40 DEG C and 90 DEG C and a water binding capacity of from 0.3 to 5g water per gram dry matter; (b) coating the enrobed food core with a particulate coating and (c) freezing the product.

A problem exists in that the quality of frozen food decreases the longer it is stored in a frozen state. Frozen food products are often pre-prepared in advance by food manufacturers. Examples include ready meals and convenience foods. Many frozen food products, such as fish fingers, have an outer coating which consumers expect to be dry and crispy after cooking. However, such products often become soggy and the outer coating may fall apart due to excess moisture arising from freezing. It is not uncommon for frozen products to be subjected to temperature and moisture changes while being stored in a conventional domestic freezer, and this can result in an end product which is soggy and undesirable.

In addition, many food products, such as fish, meat and vegetables contain a high percentage of water. Any coating composition or outer layer which is in contact with these products can, over time, become soggy and loses its crispiness on cooking.

This problem is even more pronounced for frozen products to be cooked by microwave. When frozen products are heated with a microwave oven, the water within the food product is heated very quickly and rapidly converts to steam. This can be particularly problematic when the food products are coated with an outer layer, such as a batter or breadcrumb layer. The generation of steam from inside the food product can lead to the coating layer becoming soggy, and ultimately falling apart. Additionally, the rapid loss of steam can lead to the inner food product becoming dry.

It is therefore of particular importance to consumers that any frozen food product can be stored for a significant period of time in a freezer whilst also maintaining a crispy outer layer on cooking. If products such as fish fingers, which traditionally have a dry and crispy coating, become soggy and undesirably soft on cooking, they are no longer enjoyed by the consumer. When food manufacturers prepare frozen coated food products, the appearance, colour, texture and taste of the coating after cooking are of utmost importance in order to produce a palatable and desirable food product, which consumers will buy again. At the same time, consumers demand that frozen food products can be stored in conventional domestic freezers for prolonged periods of time, without negatively impacting on the quality of the end product.

In light of the above, there exists a need for a frozen food product which can be stored for a prolonged period of time, and which is dry, crispy and desirable when cooked.

### Summary of the Invention

The present invention is defined by the appended claims.

According to a first aspect, the present invention provides a coating composition for a frozen food product comprising:
an inner pre-dust layer; and
an outer breadcrumb layer,
wherein the inner pre-dust layer and outer breadcrumb layer are separated by a batter layer that is characterised in that the batter layer comprises a lipid that is in liquid phase and wherein the inner pre-dust layer comprises hot-swelling potato starch.

According to a second aspect, the present invention provides a food product comprising a solid core coated in a coating composition according to the first aspect of the invention.

According to a third aspect, the present invention is directed to a process of providing a frozen, coated food product comprising the steps of;
(i) providing a solid core;
(ii) coating the solid core of step (i) with an inner pre-dust layer;
(iii) applying a batter layer to the product of step (ii);
(iv) applying an outer breadcrumb layer to the product of step (iii) to form a coated food product;
(v) frying said coated food product to form a fried, coated food product and;
(vi) freezing the fried, coated food product to form a frozen, coated food product;
characterised in that the batter layer comprises a lipid that is in liquid phase, and in that the inner pre-dust layer comprises hot-swelling potato starch.

### Detailed Description

The coating composition of the first aspect of the present invention will now be described in more detail.

According to the present invention there is a coating composition for a frozen food product comprising:
an inner pre-dust layer; and
an outer breadcrumb layer,
wherein the inner pre-dust layer and outer breadcrumb layer are separated by a batter layer that is characterised in that the batter layer comprises a lipid that is in liquid phase
and wherein the inner pre-dust layer comprises hot-swelling potato starch..

The coating composition of the present invention comprises three layers: an inner pre-dust layer, a batter layer and an outer breadcrumb layer. The three layers are applied sequentially to the food product: the inner pre-dust layer is applied first; the batter layer is then applied to the food product coated with the inner pre-dust layer; finally, the outer breadcrumb layer is then applied to the food product coated with the inner pre-dust layer and the batter layer.

### Pre-dust layer

In a preferred embodiment of the invention, the inner pre-dust layer is applied directly to a solid food core and provides a surface to which the batter layer can adhere.

In the present invention, the inner pre-dust layer comprises one or more of gelatinised starch, non-gelatinised starch, hot swelling potato starch, rusk, egg albumin and wheat flour, provided the inner pre-dust layer comprises hot swelling potato starch. Gelatinised starch and non-gelatinised starch have their normal meanings in the art; gelatinised starch has been treated with heat. Rusk has its standard meaning in the art and is used to refer to an ultra-fine breadcrumb. The egg albumin is preferably in powder form.

In a specific embodiment, the pre-dust layer has the following composition:
Wheat flour-29.33 %
Hot swelling potato starch - 19.27%
Rusk - 48.18%
Egg albumen powder - 3.23%

Preferably, from 4-8 wt% of the total coating composition is the inner pre-dust layer, more preferably the inner pre-dust layer accounts for 6 wt% of the total coating composition.

The inner pre-dust layer provides a moisture barrier which enhances the crispiness and rigidity of the coating and keeps moisture within the food core through to consumer consumption. In particular, the hot swelling potato starch of the inner pre-dust layer binds any excess water, which may arise from the inner food core, therefore preventing the coating composition from becoming soggy during storage and cooking.

### Batter layer

In a preferred embodiment, the batter layer of the coating composition is a wet batter. The batter layer comprises a lipid, wherein said lipid is in liquid phase. Preferably the lipid is in liquid phase at 0 to 25 °C. The lipid is more preferably in liquid phase at 5 to 21 °C, most preferably 18-21 °C. In a preferred embodiment, the lipid is in liquid phase at room temperature. The term "room temperature" has its normal meaning in the art.

In a preferred embodiment, the lipid is an oil, more preferably rapeseed oil, sunflower oil, olive oil, flaxseed oil, soybean oil, cottonseed oil, peanut oil, or other suitable nut oils. In a preferred embodiment, the lipid is selected from rapeseed oil or sunflower oil

The inventors have surprisingly discovered that the presence of a lipid in a liquid phase in the batter layer results in a frozen coated product which can be stored for a prolonged period of time, and which is dry, crispy and desirable when cooked. This is because the lipid in a liquid phase forms a moisture barrier, which prevents water from the solid food core seeping into the coating during storage or cooking. In addition, a lipid in liquid phase has more nutritional value than solid fat, and therefore can be used to produce a food product that is more nutritionally beneficial to the consumer. Furthermore, the presence of a lipid in liquid phase makes the batter more easily processable, as the batter does not need to be kept warm in order to be applied. Processing a warm batter can lead to microbial growth, unless a low pH is maintained. However, a low pH batter is undesirable for certain food products; for example a low pH toughens fish. The presence of a lipid in liquid phase avoids such problems.

In a particularly preferred embodiment, the batter layer further comprises water. The lipid and water form the liquid phase of the batter layer. Preferably, said liquid phase comprises a water to lipid ratio of from 40:60 to 70:30, most preferably 50:50. The combination of water and lipid in a liquid phase results in a frozen coated product which can be stored in a frozen state for prolonged periods of time and which is crispy when cooked. In the present invention, once the coating composition is applied to the solid food core, the product is fried. In this frying step, the water in the batter layer evaporates leaving a layer with a high content of lipid at liquid phase. In particular the water to lipid ratio after the frying step is from 25:75 to 30:70, most preferably 28:72. This forms a moisture barrier, and results in improved crispiness and rigidity of the coating composition. As this moisture barrier has such a high fat content, it means that the frozen coated food product can be stored in a frozen state for a prolonged period of time, without negatively impacting the quality of the final product.

In a preferred embodiment, the batter layer further comprises an emulsifier which forms an emulsion with the lipid in liquid phase and the water of the batter layer. Again, this emulsion allows the batter layer to be applied to the inner pre-dust layer easily and with good adhesion. Any emulsifier may be suitably used. A preferred example is egg albumin.

In a preferred embodiment, the batter layer of the present invention further comprises wheat flour, salt and dry glucose.

Preferably 18-22 wt% of the total coating composition, more preferably about 20 wt% of the total coating composition, is the batter layer.

In a preferred embodiment, the batter layer comprises; 34-40 wt% of lipid in liquid phase, 34-38 wt% water, which can be in liquid or solid state, 8-12 wt% wheat flour, 6-9 wt% egg albumin powder, 4-7 wt% dry glucose, and 1-2 wt% salt. Preferably, the liquid phase of the batter layer comprises lipid and water and is preferably 70-80 wt% of the batter layer. In addition, the water to lipid ratiois preferably approximately 50:50. The solid phase of the batter layer is preferably 20-30 wt%.

In a particularly preferred embodiment, the batter layer comprises 37.4 wt% rape seed oil, 34.2 wt% water, 10.7 wt% wheat flour, 7.5 wt% egg albumin powder, 5.4 wt% dry glucose, 3.2 wt% ice and 1.6 wt% salt.

### Breadcrumb laver

The coating composition of the present invention comprises an outer breadcrumb layer.

The moisture content of standard breadcrumbs is around 9 to 11%, with dry breadcrumbs having a moisture content of around 9%. Standard or dry breadcrumbs may be used in the coating composition of the invention. However, in a preferred embodiment, the outer breadcrumb layer comprises extra-dry breadcrumbs, having a moisture content of around 7 wt% or less, more preferably around 5 wt% or less.

As used herein, the term "moisture content" refers to the amount of moisture (i.e. water) present in the breadcrumbs. Methods for determining the water content of breadcrumbs are well-known in the art and include, for example, infrared analysis. In a preferred embodiment, the breadcrumbs comprise wheat flour, yeast, water, vegetable oil (preferably rapeseed oil), salt, sugar and spice extract.

Preferably, the particle size of breadcrumbs is within the range of from 0.1 to 6.0 mm, preferably from 0.1 to 5.6 mm. Preferably, the particle size distribution of the breadcrumbs is as follows:

| Particle size (mm) | % of crumb |
|---|---|
| >5.6 | ≤2% |
| 3.35 to 5.6 | 20 to 40% |
| 2 to 3.35 | 25 to 45% |
| 1 to 2 | 15 to 30% |
| <1 | ≤15% |

The larger sized breadcrumb particles result in a coarse coating material that produces a crispier coating composition after frying. Small sized particles are also required in the breadcrumb layer to fill spaces that form between larger particles and ensure the outer layer of the coating provides complete coverage.

As used herein, the term "particle size" refers to the largest dimension of a breadcrumb particle, which determines the smallest mesh pore diameter that the particle will be able to pass through when sieved.

Suitable methods of determining the particle size distribution of breadcrumbs using sieve analysis are routine and well-known in the art. To obtain the preferred particle size distribution described above, a series of four sieves, having mesh sizes of 5.6 mm, 3.35 mm, 2mm and 1 mm could be used.

In a preferred embodiment, 18-22 wt% of the total coating composition, and preferably 20 wt% of the total coating composition, is the outer breadcrumb layer.

A second aspect of the present invention provides a food product comprising a solid core coated in a coating composition according to the first aspect of the invention. The coated food product will now be described in more detail.

The coating composition of the present invention can be applied to solid food core to produce the food product of the present invention. The food product of the present invention is suitable for freezing.

Preferably the coated product of the present invention can be stored for at least 6 months in a frozen state, more preferably at least 9 months.

Preferably the coating composition of the frozen food product, after having been fried as part of the production process, has a water to lipid ratio of 25:75 to 30:70, most preferably 28:72.

The solid food core of the frozen coated product can be any foodstuff. In a preferred embodiment, the solid food core of the frozen coated food product may be any form of poultry, fish, vegetable, cheese or any combination thereof. When the solid food core is vegetable, potato is preferably used. Poultry has its standard meaning in the art, and includes chicken and turkey. When the solid food core is fish, it can be prepared by one of two methods.

Preferably the solid fish core is prepared by the "cut from block" method. In this method, a block of frozen fish fillets is cut into the required size for the food product to be coated. This method is particularly preferred, as it results in a fish core with a flaky appearance, which is preferred by consumers.

In an alternative embodiment, the solid fish core can be prepared by the "flaked and formed" method. In this method, a fish fillet is chopped into small pieces and mixed with hot swelling starch, cold swelling starch and dry glucose. The mixture is then reformed into the desired shape for the food product to be coated. In this method, it is possible to alter the weight and dimension of the food product with ease. In addition, it is possible to add further functional ingredients. The food core prepared by this method has a soft and consistent texture throughout, which is preferred by consumers.

When the food core is poultry, it is preferably prepared by the "chopped and shaped" method. In this method, a chicken fillet is chopped into small pieces and mixed with wheat flour, wheat starch, maize starch or rice flour. The mixture is then reformed into the desired shape for the food product to be coated.

The coated food product according to the present invention may be suitable for microwave cooking or cooking using a conventional oven or grill. Any method of frying, such as pan-fry, air-fry or deep-fry may be used. In a preferred embodiment, the food product comprising the coating of the invention is a microwavable food product.

The process of providing a frozen coated food product according to the third aspect of the present invention will now be described in more detail.

According to the present invention there is a process of providing a frozen, coated food product comprising the steps of:
(i) providing a solid core;
(ii) coating the solid core of step (i) with an inner pre-dust layer;
(iii) applying a batter layer to the product of step (ii);
(iv) applying an outer breadcrumb layer to the product of step (iii) to form a coated food product;
(v) frying said coated food product to form a fried, coated food product and;
(vi) freezing the fried, coated food product to form a frozen, coated food product;
characterised in that the batter layer comprises a lipid, wherein said lipid is in liquid phase and in that the inner pre-dust layer comprises hot-swelling potato starch.

In the process of the present invention, the solid core is preferably as described herein. In addition the inner pre-dust layer, batter layer and outer breadcrumb layer are preferably as described above.

Preferably, the solid core of step (i) is entirely coated by an even distribution of the inner pre-dust layer. Preferably, the batter layer is applied after application of the inner pre-dust layer, and coats at least 80%, preferably at least 90%, preferably 100% of the solid core and inner-pre-dust layer. Preferably the outer breadcrumb layer is applied immediately to the solid food core coated in the inner pre-dust layer and batter layer. In a preferred embodiment, the outer breadcrumb layer is applied using a vibrating plate to provide an even coating, and high breadcrumb pick-up.

In a particularly preferred embodiment, the coated food product is fried at a temperature of from 180 to 200 °C for 50 to 90 seconds, more preferably for 60 seconds at 195 °C. This extended frying step increases the lipid content of the batter layer, thus forming a moisture barrier which prevents the coating composition from becoming soggy from excess water in the food core. Prior to the frying step, the water to lipid ratio of the batter layer is preferably from 40:60 to 70:30, most preferably 50:50. During the frying step, water evaporates and the lipid content increases such that the water to lipid ratio is from 25:75 to 30:70, most preferably 28:72. This increased fat content allows the coated product to be stored in a frozen state for a prolonged period of time, preferably at least 6 months, without negatively impacting the quality of the final cooked product. In particular, the high fat content prevents the coating composition from becoming soggy and falling apart upon cooking.

In addition, the frying step also increases the crispiness and rigidity of the coating, and creates a depth of colour which consumers prefer.

In a particularly preferred embodiment, the fried, coated food product is frozen at -30°C for 30-40 minutes, preferably 35 minutes. This ensures that the food product is frozen throughout, and can be stored or transported to be sold to consumers.

## Claims

1. Coating composition for a frozen food product comprising:
an inner pre-dust layer; and
an outer breadcrumb layer,
wherein the inner pre-dust layer and outer breadcrumb layer are separated by a batter layer that is **characterised in that** the batter layer comprises a lipid that is in liquid phase and wherein the inner pre-dust layer comprises hot-swelling potato starch.

2. The coating composition according to claim 1, wherein the lipid is in liquid phase at 0 to 25°C.

3. The coating composition according to claim 1 or 2, wherein the lipid is an oil.

4. The coating composition according to any preceding claim, wherein said batter layer comprises a liquid phase comprising water and said lipid.

5. The coating composition according to claim 4, wherein said liquid phase comprises a water to lipid ratio of from 40:60 to 70:30.

6. The coating composition according to any preceding claim, wherein the batter layer further comprises an emulsifier, and wherein said lipid, emulsifier and water form an emulsion.

7. The coating composition according to any preceding claim, wherein the outer breadcrumb layer comprises breadcrumbs having particle sizes within the range of from 0.1 to 6.0 mm, preferably from 0.1 to 5.6 mm.

8. A frozen food product comprising a solid core coated in the coating composition of any preceding claim.

9. A process of providing a frozen, coated food product comprising the steps of;
(i) providing a solid core;
(ii) coating the solid core of step (i) with an inner pre-dust layer;
(iii) applying a batter layer to the product of step (ii);
(iv) applying an outer breadcrumb layer to the product of step (iii) to form a coated food product;
(v) frying said coated food product to form a fried, coated food product and;
(vi) freezing the fried, coated food product to form a frozen, coated food product;
**characterised in that** the batter layer comprises a lipid, wherein said lipid is in liquid phase and **in that** the inner pre-dust layer comprises hot-swelling potato starch.

10. The process according to claim 9, wherein the coated food product is fried at a temperature of from 180 to 200°C for 50 to 90 seconds.

11. The process according to any of claims 9 to 10, wherein the lipid is in liquid phase at 0 to 25°C.

12. The process according to any of claims 9 to 11, wherein the lipid is an oil.

13. The process according to any of claims 9 to 12, wherein said batter layer comprises a liquid phase comprising water and said lipid.

14. The process according to claim 13, wherein said liquid phase comprises a water to lipid ratio of from 40:60 to 70:30.

15. The process according to any of claims 9 to 14, wherein the outer breadcrumb layer comprises breadcrumbs having particle sizes within the range of from 0.1 to 6.0 mm, preferably from 0.1 to 5.6 mm.

## Patentansprüche

1. Beschichtungszusammensetzung für ein gefrorenes Lebensmittelprodukt, umfassend:
eine innere Vormehlschicht; und
eine äußere Bröselschicht,
wobei die innere Vormehlschicht und die äußere Bröselschicht durch eine Teigschicht getrennt sind, die **dadurch gekennzeichnet ist, dass** die Teigschicht ein Lipid umfasst, das in flüssiger Phase vorliegt, und wobei die innere Vormehlschicht heiß quellende Kartoffelstärke umfasst.

2. Beschichtungszusammensetzung nach Anspruch 1, wobei das Lipid bei 0 bis 25 °C in flüssiger Phase vorliegt.

3. Beschichtungszusammensetzung nach Anspruch 1 oder 2, wobei das Lipid ein Öl ist.

4. Beschichtungszusammensetzung nach einem der vorhergehenden Ansprüche, wobei die Teigschicht eine flüssige Phase umfasst, die Wasser und das Lipid umfasst.

5. Beschichtungszusammensetzung nach Anspruch 4, wobei die flüssige Phase ein Wasser-Lipid-Verhältnis von 40:60 bis 70:30 umfasst.

6. Beschichtungszusammensetzung nach einem der vorhergehenden Ansprüche, wobei die Teigschicht ferner einen Emulgator umfasst und wobei das Lipid, der Emulgator und das Wasser eine Emulsion bilden.

7. Beschichtungszusammensetzung nach einem der vorhergehenden Ansprüche, wobei die äußere Bröselschicht Brösel mit Partikelgrößen im Bereich von 0,1 bis 6,0 mm, vorzugsweise von 0,1 bis 5,6 mm umfasst.

8. Gefrorenes Lebensmittelprodukt, umfassend einen festen Kern, der mit der Beschichtungszusammensetzung nach einem der vorhergehenden Ansprüche beschichtet ist.

9. Prozess zum Bereitstellen eines gefrorenen, beschichteten Lebensmittelprodukts, umfassend die folgenden Schritte:
(i) Bereitstellen eines festen Kerns;
(ii) Beschichten des festen Kerns aus Schritt (i) mit einer inneren Vormehlschicht;
(iii) Aufbringen einer Teigschicht auf das Produkt aus Schritt (ii) ;
(iv) Aufbringen einer äußeren Bröselschicht auf das Produkt aus Schritt (iii), um ein beschichtetes Lebensmittelprodukt zu bilden;
(v) Frittieren des beschichteten Lebensmittelprodukts, um ein frittiertes, beschichtetes Lebensmittelprodukt zu bilden; und
(vi) Einfrieren des frittierten, beschichteten Lebensmittelprodukts, um ein gefrorenes, beschichtetes Lebensmittelprodukt zu bilden; **dadurch gekennzeichnet, dass** die Teigschicht ein Lipid umfasst, wobei das Lipid in flüssiger Phase vorliegt, und dadurch, dass die innere Vormehlschicht heiß quellende Kartoffelstärke umfasst.

10. Prozess nach Anspruch 9, wobei das beschichtete Lebensmittelprodukt 50 bis 90 Sekunden lang bei einer Temperatur von 180 bis 200 °C frittiert wird.

11. Prozess nach einem der Ansprüche 9 bis 10, wobei das Lipid bei 0 bis 25 °C in flüssiger Phase vorliegt.

12. Prozess nach einem der Ansprüche 9 bis 11, wobei das Lipid ein Öl ist.

13. Prozess nach einem der Ansprüche 9 bis 12, wobei die Teigschicht eine flüssige Phase umfasst, die Wasser und das Lipid umfasst.

14. Prozess nach Anspruch 13, wobei die flüssige Phase ein Wasser-Lipid-Verhältnis von 40:60 bis 70:30 umfasst.

15. Prozess nach einem der Ansprüche 9 bis 14, wobei die äußere Bröselschicht Brösel mit Partikelgrößen im Bereich von 0,1 bis 6,0 mm, vorzugsweise von 0,1 bis 5,6 mm umfasst.

## Revendications

1. Composition de revêtement pour un produit alimentaire congelé comprenant :
une couche intérieure de pré-farinage ; et
une couche extérieure de chapelure,
dans laquelle la couche intérieure de pré-farinage et la couche extérieure de chapelure sont séparées par une couche de pâte à frire qui est **caractérisée en ce que** la couche de pâte à frire comprend un lipide qui est en phase liquide et dans laquelle la couche intérieure de pré-farinage comprend de l'amidon de pomme de terre gonflant à chaud.

2. Composition de revêtement selon la revendication 1, dans laquelle le lipide est en phase liquide à une température de 0 à 25 °C.

3. Composition de revêtement selon la revendication 1 ou 2, dans laquelle le lipide est une huile.

4. Composition de revêtement selon une quelconque revendication précédente, dans laquelle ladite couche de pâte à frire comprend une phase liquide comprenant de l'eau et ledit lipide.

5. Composition de revêtement selon la revendication 4, dans laquelle ladite phase liquide comprend un rapport eau à lipide de 40:60 à 70:30.

6. Composition de revêtement selon une quelconque revendication précédente, dans laquelle la couche de pâte à frire comprend en outre un émulsifiant, et dans laquelle lesdits lipide, émulsifiant et eau forment une émulsion.

7. Composition de revêtement selon une quelconque revendication précédente, dans laquelle la couche extérieure de chapelure comprend de la chapelure ayant des tailles de particules dans la plage de 0,1 à 6,0 mm, de préférence de 0,1 à 5,6 mm.

8. Produit alimentaire congelé comprenant un noyau solide revêtu de la composition de revêtement selon une quelconque revendication précédente.

9. Procédé de fourniture d'un produit alimentaire congelé revêtu comprenant les étapes de ;
(i) fourniture d'un noyau solide ;
(ii) revêtement du noyau solide de l'étape (i) d'une couche intérieure de pré-farinage ;
(iii) application d'une couche de pâte à frire sur le produit de l'étape (ii) ;
(iv) application d'une couche extérieure de chapelure sur le produit de l'étape (iii) pour former un produit alimentaire revêtu ;
(v) friture dudit produit alimentaire revêtu pour former un produit alimentaire revêtu frit et ;
(vi) congélation du produit alimentaire revêtu frit pour former un produit alimentaire revêtu congelé ; **caractérisé en ce que** la couche de pâte à frire comprend un lipide, dans lequel ledit lipide est en phase liquide et **en ce que** la couche intérieure de pré-farinage comprend de l'amidon de pomme de terre gonflant à chaud.

10. Procédé selon la revendication 9, dans lequel le produit alimentaire revêtu est frit à une température de 180 à 200 °C pendant 50 à 90 secondes.

11. Procédé selon l'une quelconque des revendications 9 et 10, dans lequel le lipide est en phase liquide à une température de 0 à 25 °C.

12. Procédé selon l'une quelconque des revendications 9 à 11, dans lequel le lipide est une huile.

13. Procédé selon l'une quelconque des revendications 9 à 12, dans lequel ladite couche de pâte à frire comprend une phase liquide comprenant de l'eau et ledit lipide.

14. Procédé selon la revendication 13, dans lequel ladite phase liquide comprend un rapport eau à lipide de 40:60 à 70:30.

15. Procédé selon l'une quelconque des revendications 9 à 14, dans lequel la couche extérieure de chapelure comprend de la chapelure ayant des tailles de particules dans la plage de 0,1 à 6,0 mm, de préférence de 0,1 à 5,6 mm.
